# EUROPÄISCHE PATENTSCHRIFT

(11) **EP 3 509 767 B1**
(45) Veröffentlichungstag und Bekanntmachung des Hinweises auf die Patenterteilung: **25.01.2023**
(21) Anmeldenummer: 17761503.6
(22) Anmeldetag: 05.09.2017
(51) Int. Cl.: B08B 3/02, B29C 33/72

(54) **VORRICHTUNG UND VERFAHREN ZUM REINIGEN DER OBERFLÄCHE EINES WERKZEUGS**
DEVICE AND METHOD FOR CLEANING THE SURFACE OF A TOOL
DISPOSITIF ET PROCÉDÉ DE NETTOYAGE DE LA SURFACE D'UN OUTIL

(30) Priorität: 08.09.2016 DE 102016116797
(43) Veröffentlichungstag der Anmeldung: 17.07.2019
(73) Patentinhaber: Hammelmann GmbH, 59302 Oelde (DE); Purima GmbH & Co. KG, 32457 Porta Westfalica (DE)
(72) Erfinder: PAPE, Ralf, 32457 Porta Westfalica (DE); LÜCKEMEIER. Stephan, 59302 Oelde (DE)
(74) Vertreter: Kleine, Hubertus
(86) Internationale Anmeldenummer: PCT/EP2017/072141
(87) Internationale Veröffentlichungsnummer: WO 2018/046456

(56) Entgegenhaltungen:
- EP-A1- 2 354 315
- EP-A2- 0 124 768
- WO-A1-2013/164487
- DE-A1- 19 539 586
- GB-A- 2 221 630
- JP-A- 2005 319 351
- US-A- 5 991 968

## Beschreibung

Die vorliegende Erfindung betrifft eine Vorrichtung zum Reinigen der Oberfläche eines Werkzeugs für die Formgebung eines großflächigen Faserverbundwerkstoffkörpers mit einer unter Hochdruck stehenden Reinigungsflüssigkeit gemäß dem Oberbegriff des Anspruchs 1.

Die Erfindung betrifft des Weiteren ein Verfahren zum Reinigen der Oberfläche eines Werkzeugs für die Formgebung eines großflächigen Faserverbundwerkstoffkörpers.

Bei der Herstellung großflächiger und sicherheitsrelevanter Bauteile aus Faserverbundwerkstoffen wie beispielsweise CFK (Kohlenstofffaserverstärkter Kunststoff) oder GFK (Glasfaserverstärkter Kunststoff) ist die Sauberkeit der meist metallischen dreidimensionalen Negativformen solcher komplexer Bauteile von großer Bedeutung, da es bei Wiederverwendung dieser Negativformen zur Herstellung weiterer Bauteile bei Restverschmutzungen dieser auch als Werkzeuge bezeichneten Negativformen zu Kontaminationen des nachfolgend herzustellenden Bauteils sowie zu Produktionsfehlern bei der Entformung kommen kann.

Solche verschmutzungsbedingten Produktionsfehler sind insbesondere aufgrund der Größe der hier betrachteten komplexen Bauteile und des damit einhergehenden beträchtlichen wirtschaftlichen Verlustes und möglicher Lieferverzögerungen möglichst zu vermeiden.

Des Weiteren ist eine prozesssichere Behandlung solcher insbesondere für sicherheitsrelevante Bauteile äußerst wichtig, da verschmutzungsbedingte Qualitätsabweichungen mit einem hohen Risiko beim Einsatz dieser Bauteile einhergehen, so dass solche Qualitätsabweichungen in der Regel zur Aussortierung dieser Bauteile führen.

Wichtig ist außerdem, bei der Reinigung dieser Werkzeuge keine Rückstände des Reinigungsmediums auf den Werkzeugen zu belassen. So würden insbesondere auf den Werkzeugen belassene Wasserreste, die beim Einsatz des Werkzeugs eines Nachfolgebauteils in die beispielsweise aus Harzen wie Epoxidharz oder Laminierharz bestehenden Schichten des Faserverbundwerkstoffbauteils beim Aushärten unter definierten Temperatur- und Druckbedingungen zur Blasenbildung führen, was ebenfalls zum Ausschuss dieses Bauteils und dem damit einhergehenden wirtschaftlichen Schaden führen würde.

Aus der EP 2 354 315 A1 ist eine Reinigungsvorrichtung zur Reinigung asphaltierter Straßen mit einem an einem Zentrallager angeordneten Düsenträger mit an Armen des Düsenträgers gehaltenen Strahldüsen bekannt, bei der der Düsenträger von einem Gehäuse mit zwei konzentrisch angeordneten flexiblen Gummidichtungen oder Bürsten umgeben ist, die zum einen der Abdichtung einer inneren Kammer, in der die Strahldüsen angeordnet sind, und zum zweiten der Abdichtung einer die innere Kammer umgebenden Saugeinrichtung dienen. Aus der WO 2013/164487 A1 ist ein Werkzeug zur Reinigung von großen Flächen für insbesondere Bootsrümpfe bekannt, mit zwei nebeneinander angeordneten Düsenträger mit an Armen der Düsenträgers gehaltenen Strahldüsen. Die Kammer, in der die Strahldüsen angeordnet sind, ist hier von einer umläufigen, federnd am Werkzeugkörper gehaltenen Dichtung umgeben. Aufgabe der vorliegenden Erfindung ist es, eine Vorrichtung zum Reinigen der Oberfläche eines solchen Werkzeuges sowie ein prozesssicheres Verfahren zum Reinigen der Oberfläche eines solchen Werkzeugs bereitzustellen.

Diese Aufgabe wird durch eine Vorrichtung zum Reinigen der Oberfläche eines Werkzeuges für die Formgebung der Oberfläche eines großflächigen Faserverbundwerkstoffkörpers mit den Merkmalen des Anspruchs 1 sowie durch ein Verfahren zum Reinigen der Oberfläche eines Werkzeuges für die Formgebung der Oberfläche eines großflächigen Faserverbundwerkstoffkörpers mit den Merkmalen des Anspruchs 13 gelöst.

Die erfindungsgemäße Vorrichtung zum Reinigen der Oberfläche eines Werkzeugs für die Formgebung eines großflächigen Faserverbundwerkstoffkörpers mit einer unter Hochdruck stehenden Reinigungsflüssigkeit weist die Merkmale des Anspruchs 1 auf.

Der Düsenträger ist von einem Gehäuse umgeben, das zur zu reinigenden Oberfläche des Werkzeuges hin offen ausgebildet ist. Das Gehäuse ist des Weiteren an einer Absaugeinrichtung angeschlossen, mit der ein Innenraum des Gehäuses, in dem der Düsenträger angeordnet ist, absaugbar ist. Der Innenraum des Gehäuses ist zur Vermeidung der Entstehung eines starken Unterdruckes über ein Druckventil mit einer Außenumgebung verbunden.

An dem offenen Ende des Gehäuses ist eine formflexible flüssigkeitsdichte Abdichtung angeordnet, mit der der Raum zwischen dem Düsenträger und der zu reinigenden Oberfläche des Körpers zur Außenumgebung abdichtbar ist.

Die Steuereinheit weist wenigstens zwei Druckbereichseinstellungen auf, wobei in einer ersten Druckbereichseinstellung der Druck der aus der wenigstens einen Strahldüse austretenden Reinigungsflüssigkeit so eingestellt ist, dass Faserverbundwerkstoffreste von einer mit einem Trennmittel beschichteten Oberfläche des Werkzeuges entfernbar sind, ohne die Trennmittelschicht zu beschädigen und in einer zweiten Druckbereichseinstellung der Druck der aus der wenigstens einen Strahldüse austretenden Reinigungsflüssigkeit so eingestellt ist, dass mit der wenigstens einen Strahldüse das Trennmittel von der Oberfläche des Werkzeuges entfernbar ist.

Das Gehäuse weist dabei eine doppelwandige Mantelfläche auf, mit einer zwischen einer Außenwand und einer Innenwand gebildeten Zwischenkammer, wobei jeweils eine formflexible Abdichtung an der Außenwand und der Innenwand angeordnet ist.

Eine weitere Verbesserung der Dichtwirkung wird dadurch erreicht, das die Außenwand und/oder die Innenwand des Gehäuses um eine Rotationsachse des Düsenträgers rotierbar ausgebildet ist.

Mit einer derart ausgebildeten Reinigungsvorrichtung ist eine sichere Absaugung von der Oberfläche des Werkzeugs durch die unter Hochdruck stehende Reinigungsflüssigkeit gelösten Schmutzes gewährleistet.

Durch die Ausbildung der Abdichtung als formflexible Abdichtung ist auch ein Überfahren der Vorrichtung von Unstetigkeitsstellen in der zu bearbeitenden Oberfläche des Werkzeugs wie beispielsweise Kanten, Vertiefungen oder dergleichen ermöglicht, da die formflexible Abdichtung anpassungsfähig an eine solche Kontur ist und gleichzeitig technisch flüssigkeitsdicht ist, damit ein Austreten insbesondere von Reinigungsflüssigkeit aus dem Innenraum des Gehäuses heraus wirksam vermieden wird.

Ein Zusammenbrechen des Unterdrucks im Innenraum beim Überfahren von Unstetigkeitsstellen wird durch das Schließen des Druckventils verhindert und dadurch eine sichere Absaugung auch in dieser Situation gewährleistet.

Bei dem erfindungsgemäßen Verfahren zum Reinigen der Oberfläche eines Werkzeugs für die Formgebung eines großflächigen Faserverbundwerkstoffkörpers mit einer oben beschriebenen Vorrichtung wird zumindest eine Position und Vorschubgeschwindigkeit des Düsenträgers relativ zur zu reinigenden Oberfläche des Körpers sowie ein zu beaufschlagender Druck der aus der wenigstens einen Strahldüse austretenden Reinigungsflüssigkeit durch die Steuereinheit gesteuert.

Die Steuereinheit weist wenigstens zwei Druckbereichseinstellungen auf, wobei in einer ersten Druckbereichseinstellung der Druck der aus der wenigstens einen Strahldüse austretenden Reinigungsflüssigkeit so eingestellt ist, dass Faserverbundwerkstoffreste von einer mit einem Trennmittel beschichteten Oberfläche des Werkzeuges entfernt werden, ohne die Trennmittelschicht zu beschädigen und in einer zweiten Druckbereichseinstellung der Druck der aus der wenigstens einen Strahldüse austretenden Reinigungsflüssigkeit so eingestellt ist, das mit der wenigstens einen Strahldüse das Trennmittel von der Oberfläche des Werkzeuges entfernt wird.

Mit dem erfindungsgemäßen Verfahren sind die oben beschriebenen Anforderungen für die Reinigung der Oberfläche eines solchen Werkzeuges ermöglicht.

Vorteilhafte Ausführungsvarianten der Erfindung sind Gegenstand der Unteransprüche.

Diese Zwischenkammer steht bevorzugt mit einer Sperrlufteinheit in Wirkverbindung. Diese Sperrluft wird dabei durch die Zwischenkammer in Richtung des offenen Endes des Gehäuses geblasen und sorgt so dafür, dass die Abdichtung des Innenraums des Gehäuses nochmals verbessert wird.

Zur Ermöglichung einer möglichst homogenen Energieverteilung durch die unter Hochdruck stehende Reinigungsflüssigkeit auf die Oberfläche des Werkzeuges ist der Düsenträger bevorzugt entlang seiner Rotationsachse höhenverstellbar ausgebildet.

Zur möglichst exakten Anpassung und Ausrichtung der Vorrichtung an die zu reinigende Oberfläche des Werkzeugs ist das Zentrallager an einer Trageeinrichtung mit wenigstens drei Linearachsen und zwei Schwenkachsen festgelegt.

Des Weiteren ist zur Erreichung einer möglichst homogenen Energieverteilung eine Drehzahl des wenigstens einen Düsenträgers in Abhängigkeit von seiner Vorschubgeschwindigkeit ansteuerbar.

Die formflexible flüssigkeitsdichte Abdichtung ist bevorzugt als Vielzahl nebeneinander angeordneter, flexibler Borsten ausgebildet. Die Borsten bestehen insbesondere aus Metall, beispielsweise aus einer Nickelbasis-Legierung. Denkbar sind auch Kunststoffborsten. Wichtig ist dabei, dass die Borsten beim Überfahren des Werkzeugs keine Kratzer auf dessen Oberfläche verursachen.

Die Borsten sind dabei bevorzugt zur Außenumgebung hin gekrümmt ausgerichtet. Beim Einsatz der Vorrichtung wird das Werkzeug so nah an die Oberfläche des Werkzeuges heranbewegt, dass die Borsten beim Aufsetzen auf die Oberfläche des Werkzeuges noch weiter gekrümmt werden. Durch die Vorkrümmung ist die Krümmungsrichtung definiert.

Die Ausrichtung der Krümmung nach außen hat den weiteren Vorteil, dass die auf der Oberfläche des Werkzeugs aufliegenden Borsten durch die durch die Zwischenkammer strömende Sperrluft fester an die Oberfläche des Werkzeuges angedrückt werden. Ein im Zwischenraum entstehender Überdruck kann durch die an der Außenwand angebrachten Borsten zwischen der Oberfläche des Werkzeugs und den Borsten entweichen.

Die Borsten sind des Weiteren derart gekrümmt ausgerichtet, dass die freien Enden der Borsten in eine Richtung seitlich versetzt zur Vorschubbewegung der Gehäusewand, an der die Borsten befestigt sind, zeigen.

Dadurch wird ein Umschlagen der Krümmung der Borsten bei Beaufschlagung durch Druckkräfte wirksam verhindert, da die freien Borstenenden durch ihre Ausrichtung bedingt stets seitlich ausweichen können ohne ihre Dichtwirkung zu verlieren.

Eine weitere Verbesserung diese Effekts wird durch eine aufgeprägte Rotationbewegung der Gehäusewand entgegen der Krümmungsrichtung der Borsten bewi rkt.

Der Anstellwinkel der Borsten relativ zur Drehachse der Gehäusewand beträgt dabei bevorzugt zwischen 5° und 45°.

Die erste Druckbereichseinstellung des bei der Reinigung zu beaufschlagenden Druckes der Reinigungsflüssigkeit liegt bevorzugt zwischen 40 MPa und 120 MPa, insbesondere zwischen 70 MPa und 90 MPa. Ein solcher Druck ermöglicht ein zuverlässiges Abtragen von Faserverbundwerkstoffresten, die beim Entformen des Werkzeugs auf dem Werkzeug verblieben sind, ohne dabei jedoch ein Trennmittel zu beschädigen, mit dem die Oberfläche des Werkzeugs zur möglichst einfachen und schädigungsfreien Entformung des Werkzeugs beschichtet ist.

Bei der zweiten Druckbereichseinstellung liegt der zu beaufschlagende Druck der Reinigungsflüssigkeit bevorzugt zwischen 200 MPa und 320 MPa, insbesondere zwischen 230 MPa und 270 MPa. Dieser erhöhte Druck ermöglicht es, nach mehreren Reinigungsvorgängen, bei denen Faserverbundwerkstoffreste gelöst wurden, nunmehr auch das Trennmittel von dem Werkzeug vollständig zu entfernen.

Vor der Verwendung des Werkzeugs für die Formung des folgenden Faserverbundwerkstoffkörpers wird das Werkzeug dann zunächst wieder mit einem Trennmittel, wie beispielsweise einem Grundierlack, einem Wachs oder einem Folientrennmittel, beschichtet.

Gemäß einer vorteilhaften Ausführungsvariante des erfindungsgemäßen Verfahrens wird der bei der Reinigung zu beaufschlagende Druck der Reinigungsflüssigkeit positionsabhängig gesteuert, was insbesondere einer möglichst gleichmäßigen Energieverteilung dient. Diese Energieverteilung auf die zu reinigende Oberfläche des Werkzeugs durch das Beaufschlagen der Reinigungsflüssigkeit beträgt dabei bevorzugt zwischen 10 MJ/m² und 25 MJ/m².

Um die restlose Entfernung der Reinigungsflüssigkeit beim Absaugen durch die Absaugeinrichtung zu unterstützen, wird die Reinigungsflüssigkeit vor deren Beaufschlagung auf die zu reinigende Oberfläche des Werkzeugs auf eine Temperatur nahe der Verdampfungstemperatur der Reinigungsflüssigkeit gebracht. Dadurch wird die Gefahr, dass ein Flüssigkeitsfilm auf der Werkzeugoberfläche verbleibt, durch Verdampfung derselben verringert.

Zur exakten Steuerung der Vorrichtung bei einem Reinigungsvorgang wird die zu reinigende Oberfläche des Werkzeugs berührungslos von der Steuereinheit erkannt und entsprechend die Positionierung des wenigstens einen Düsenträgers derart gesteuert, dass die Borsten auf die zu reinigende Oberfläche des Werkzeuges unter Krümmung der Borsten aufgedrückt werden.

Nachfolgend wird ein bevorzugtes Ausführungsbeispiel der Erfindung anhand der beiliegenden Zeichnungen näher erläutert. Es zeigen:
- Fig. 1: eine perspektivische Teilschnittansicht einer Ausführungsvariante einer erfindungsgemäßen Vorrichtung,
- Fig. 2: eine schematische perspektivische Darstellung der Vorrichtung gemäß Fig. 1 im Reinigungseinsatz,
- Fig. 3: eine Frontansicht auf die Abdichtung der Vorrichtung,
- Fig. 4: eine perspektivische Detailansicht des in Fig. 3 mit IV gekennzeichneten Ausschnitts zur Darstellung der Borsten der Abdichtung,
- Fig. 5: eine Draufsicht auf die in Fig. 1 gezeigte Vorrichtung und
- Fig. 6: eine Detailansicht des in Fig. 5 mit VI gekennzeichneten Ausschnitts der Abdichtung zur Darstellung der Krümmung der Borsten.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Werkzeugs, des Zentrallagers, der Strahldüse, der Düsenträger, des Gehäuses, der Borsten und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

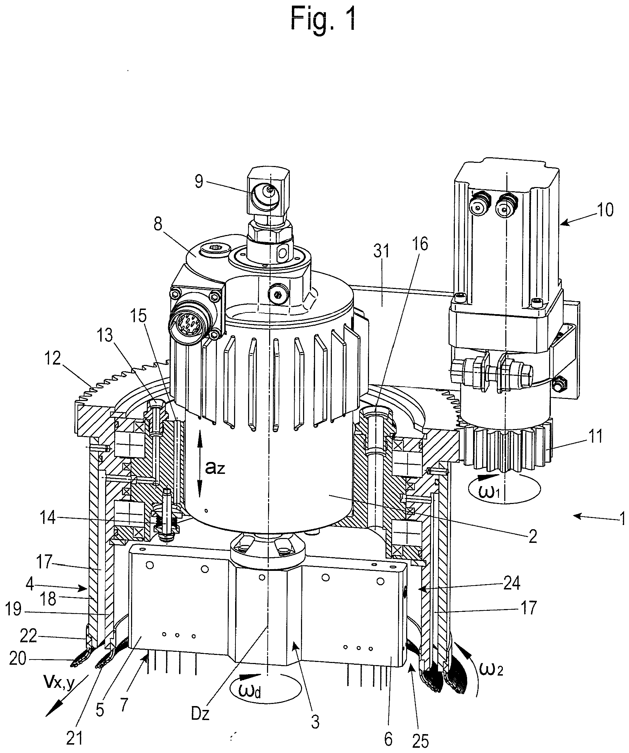

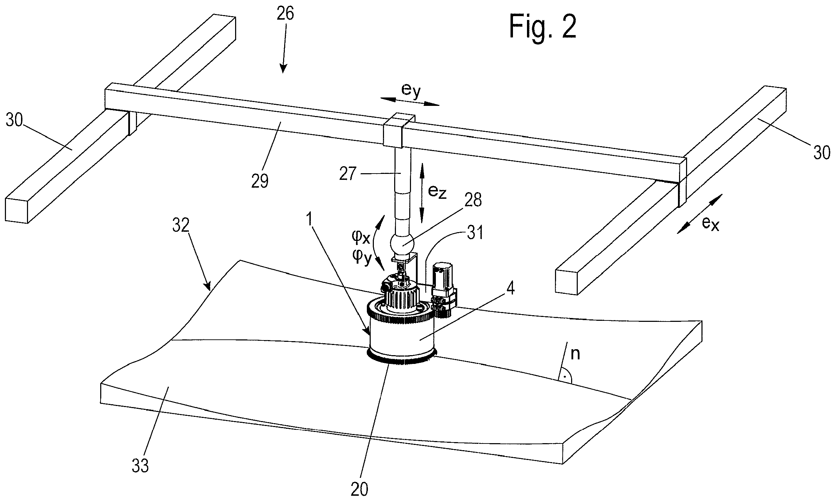

In Fig. 1 ist mit dem Bezugszeichen 1 eine Ausführungsvariante einer erfindungsgemäßen Vorrichtung zur Reinigung einer in Fig. 2 dargestellten beispielhaften Oberfläche 33 eines Werkzeugs 32 für die Formgebung der Oberfläche eines großflächigen Faserverbundwerkstoffkörpers wie beispielsweise eines Tragflügels eines Flugzeugs, bezeichnet.

Die Vorrichtung ist dabei, wie in Fig. 2 dargestellt, an einer Trageeinrichtung 26 befestigt, um die Vorrichtung 1 für den Reinigungsvorgang exakt über die Oberfläche 33 des Werkzeuges 32 führen zu können. Die Trageeinrichtung 26 besteht dabei vorzugsweise aus wenigstens drei Linearachsen 27, 29, 30, wie in Gestalt von relativ zueinander verfahrbar angeordneten Traggestängen, sowie wenigstens zwei Schwenkachsen, hier in Gestalt eines Kugelgelenks 28, welches geeignet ist, die Vorrichtung 1 um einen Winkel ϕₓ und ϕ_{y} zu verschwenken. Das Gelenk ist dabei auf einem Halter 31 aufgesetzt, an dem die Vorrichtung 1 befestigt ist.

Die Vorrichtung 1 weist, wie in Fig. 1 gezeigt ist, ein Zentrallager 2 auf. An dem Zentrallager 2 ist ein Düsenträger 3 drehbar um eine Zentralachse D_{z} gehalten. Der Antrieb des Düsenträgers 3 erfolgt dabei durch einen Rotationsantrieb 8, der am Zentrallager 2 festgelegt ist.

Der Düsenträger 3 ist des Weiteren entlang seiner Rotationsachse D_{z} höhenverstellbar ausgebildet.

Der Düsenträger 3 weist wenigstens eine Strahldüse 7, im hier gezeigten Ausführungsbeispiel mehrere solcher Strahldüsen 7 auf, aus denen in Funktion die unter Hochdruck stehende Reinigungsflüssigkeit austritt. Die Zuleitung der Reinigungsflüssigkeit zu den Strahldüsen 7 erfolgt dabei im Inneren des Düsenträgers 3 durch das Zentrallager 2 hindurch zu einem Hochdruckanschluss 9.

Der Düsenträger 3 weist in der hier gezeigten Ausführungsvariante zwei Arme 5, 6 auf, welche radial zur Drehachse D_{z} gleich lang ausgebildet sind. Eine in den Figuren nicht dargestellte Steuereinheit dient der Steuerung des zu beaufschlagenden Druckes der Reinigungsflüssigkeit.

Der Düsenträger 3 ist dabei von einem hier glockenartig ausgebildeten Gehäuse 4 umgeben, das zur zu reinigenden Oberfläche 33 des Werkzeugs 32 hin offen ist.

Das Gehäuse 4 weist des Weiteren einen Vakuumanschluss 16 zum Anschluss an eine Absaugeinrichtung auf, mit der ein Innenraum 24 des Gehäuses 4, in dem der Düsenträger 3 angeordnet ist, absaugbar ist. Zur Vermeidung eines zu starken Unterdrucks im Innenraum 24 des Gehäuses 4 weist der Innenraum 24 des Gehäuses 4 ein Druckventil 14 auf, das über eine Bohrung 15 im Gehäuse 4 mit der Außenumgebung verbunden ist, um eine Zufuhr von Außenluft durch die Bohrung 15 in den Innenraum 24 des Gehäuses 4 zu ermöglichen.

Wie in Fig. 1 des Weiteren zu erkennen ist, ist das Gehäuse 4 mit einer doppelwandigen Mantelfläche ausgebildet, mit einer zwischen einer Außenwand 18 und einer Innenwand 19 ausgebildeten Zwischenkammer 17.

An einem offenen Ende des Gehäuses 4 ist eine formflexible flüssigkeitsdichte Abdichtung 20, 21 angeordnet, mit der der Raum zwischen dem Düsenträger 3 und der zu reinigenden Oberfläche 33 des Körpers 32, wie in Fig. 2 gezeigt, zur Außenumgebung abdichtbar ist.

Die formflexible flüssigkeitsdichte Abdichtung 20, 21 ist in der hier gezeigten Ausführungsvariante in Gestalt von nebeneinander angeordneten flexiblen Borsten 23 ausgebildet. Die Borsten 23 sind, wie in den Figuren 1, 3 und 4 gezeigt ist, an einem Befestigungskragen 22 nebeneinander angeordnet und bilden so ein Abdichtungsband.

Wie in der Fig. 1 gezeigt ist, ist ein solches Band von Borsten 23 zum einen an der Außenwand 18 und zum anderen an der Innenwand 19 befestigt, vorzugsweise verklebt.

Die Borsten 23 bestehen dabei bevorzugt aus einem Metall wie beispielsweise einer Nickelbasisverbindung. Denkbar ist auch die Fertigung der Borsten 23 aus einem Kunststoff. Wichtig ist, dass das Material der Borsten 23 bei Gleiten über die Oberfläche 33 des Werkzeugs 32 die Oberfläche 33 des Werkzeugs 32 nicht beschädigt.

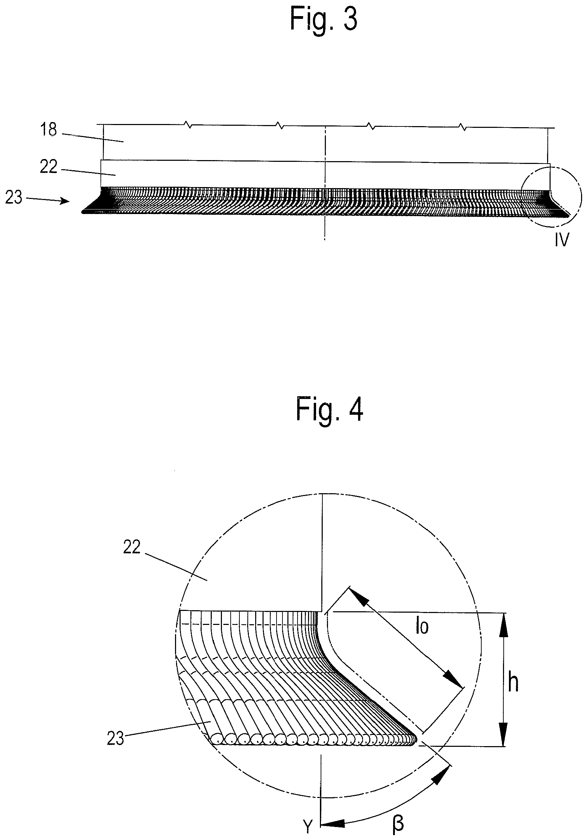

Um eine hinreichende Abdichtung des Innenraums 24 durch die Borsten 23 auch beim Überfahren der Vorrichtung 1 von Unstetigkeitsstellen der Oberfläche 33 wie beispielsweise Kanten oder Einbuchtungen zu ermöglichen, ohne dass das Reinigungsmedium aus dem Innenraum 24 des Gehäuses 4 entweichen zu lassen, ist die Absolutlänge l₀ der Borsten 23 so bemessen, dass die durch die Borsten 23 überbrückbare Höhendistanz h, wie in Fig. 4 angedeutet, variabel ist.

Dazu sind die Borsten 23 zur Außenumgebung gekrümmt ausgerichtet. Die Krümmung der Borsten 23 nach außen um einen Anstellwinkel β relativ zur Drehachse D_{z} der Gehäusewand 18, 19 beträgt bevorzugt zwischen 5° und 45°. Diese Krümmung nach außen ermöglicht des Weiteren ein Andrücken der an der Innenwand 19 angebrachten Borsten 23 durch die Zufuhr von Sperrluft, die durch einen Sperrluftanschluss 13, gezeigt in Fig. 1, in die Zwischenkammer 17 geblasen wird und dabei an ihrem offenen Ende auf die freien Enden der Borsten 23 der an der Innenwand 19 angebrachten Borsten 23 drückt.

Wie in Fig. 1 des Weiteren gezeigt ist, ist eine Mantelfläche des Gehäuses 4 mit einem Zahnkranz 12 versehen, mit dem ein Zahnrad 11 eines Antriebs 10 kämmt, der der Rotation der Innenwand 19 des Gehäuses 4 dient. Denkbar ist auch, anstelle der Innenwand 19 die Außenwand 18 rotierbar auszuführen oder die Außenwand und die Innenwand gegenläufig rotierend auszubilden.

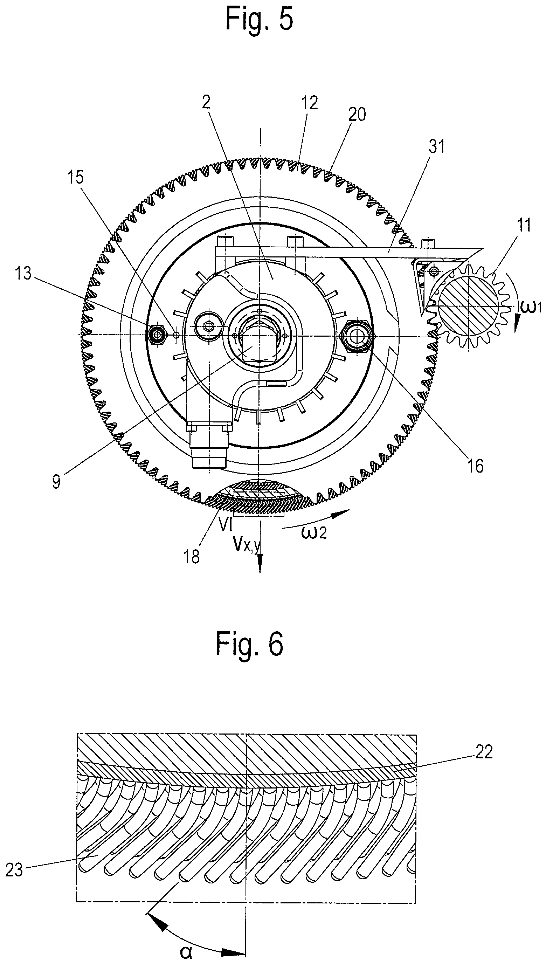

Wie in Fig. 6 dargestellt ist, sind die Borsten 23 zur Verhinderung eines Umschlagens bedingt durch die Rotation der Innenwand 19 des Gehäuses 4 bevorzugt derart gekrümmt ausgerichtet, dass die freien Enden der Borsten 23 in eine Richtung entgegen der Rotationsrichtung der Innenwand 19 des Gehäuses 4, die sich mit einer Drehzahl ω₂ um die Achse D_{z} dreht, an der die Borsten 23 befestigt sind, zeigen.

Die Drehzahl ω_{D} des wenigstens einen Düsenträgers 3 ist dabei in Abhängigkeit von der Vorschubgeschwindigkeit v_{x,y} der Vorrichtung durch die Steuereinheit ansteuerbar.

Sind die Borsten 23 an einer nicht rotierenden Wand befestigt, sind die Borsten 23 bevorzugt derart gekrümmt ausgerichtet, dass die freien Enden der Borsten 23 in eine Richtung seitlich versetzt zur Vorschubrichtung der Gehäusewand 18, 19 zeigen, an der die Borsten 23 befestigt sind.

Die Steuereinheit hat des Weiteren die Aufgabe, den Druck der aus den Strahldüsen 7 austretenden Reinigungsflüssigkeit zu steuern. Die Steuereinheit weist dabei wenigstens zwei Druckbereichseinstellungen auf.

Dabei ist der Druck in einer ersten Druckbereichseinstellung so eingestellt, dass Faserverbundwerkstoffreste von einer mit einem Trennmittel beschichteten Oberfläche 33 des Werkzeuges 32 entfernbar sind, ohne gleichzeitig die Trennmittelschicht auf der Oberfläche 33 des Werkzeugs 32 zu beschädigen.

Diese Druckbereichseinstellung wird dabei stets nach einer erfolgten Entformung des Faserverbundwerkstoffkörpers von dem Werkzeug 32 eingesetzt und dient der Abtragung von Faser- und Werkstoffresten vom Werkzeug 32.

Die zweite Druckbereichseinstellung ist dabei dergestalt, dass der Druck der aus den Strahldüsen 7 austretenden Reinigungsflüssigkeit so eingestellt ist, dass mit den Strahldüsen 7 das Trennmittel von der Oberfläche 33 des Werkzeuges 32 entfernbar ist. Dies ermöglicht, nach mehreren Einsätzen eines solchen Werkzeugs 32 dieses mit einer neuen Trennmittelbeschichtung zu versehen, wozu die vormals auf dem Werkzeug 32 aufgebrachte Trennmittelschicht zunächst vollständig abgetragen werden muss, was mit der Vorrichtung 1 durch Einstellen der zweiten Druckbereichseinstellung ermöglicht ist.

In der ersten Druckbereichseinstellung beträgt der zu beaufschlagende Druck der Reinigungsflüssigkeit zwischen 40 MPa und 120 MPa, insbesondere zwischen 70 MPa und 90 MPa.

In der zweiten Druckbereichseinstellung, bei der auch das Trennmittel von der Oberfläche 33 des Werkzeugs 32 entfernt werden soll, liegt der beaufschlagte Druck zwischen 200 MPa und 320 MPa, insbesondere zwischen 230 MPa und 270 MPa.

Die zu beaufschlagenden Drücke werden dabei je nach Einsatzzweck und Abstand der Strahldüsen 7 von der zu reinigenden Oberfläche 33 positionsabhängig gesteuert.

Die Steuerung erfolgt dabei bevorzugt dergestalt, dass eine durch die Beaufschlagung der Reinigungsflüssigkeit auf die zu reinigende Oberfläche 33 des Werkzeugs 32 ausgeübte Energieverteilung zwischen 10 MJ/m² und 25 MJ/m² beträgt.

Zur weiteren Vermeidung eines Verbleibens von Reinigungsflüssigkeitsresten auf der gereinigten Oberfläche 33 nach erfolgter Reinigung mit der Vorrichtung 1 wird die Reinigungsflüssigkeit selbst bevorzugt vor der Beaufschlagung auf die zu reinigende Oberfläche 33 des Werkzeuges 32 auf eine Temperatur nahe der Verdampfungstemperatur der Reinigungsflüssigkeit gebracht. Im Falle des Einsatzes von Wasser als Reinigungsflüssigkeit, wird demgemäß bevorzugt Wasser mit einer Temperatur von über 90°C eingesetzt.

Die Steuereinheit ermöglicht des Weiteren eine berührungslose Erkennung der zu reinigenden Oberfläche des Werkzeugs 32, sei es durch Anschluss an einen beispielsweise optischen Sensor oder dergleichen oder die Eingabe der Konturen der zu reinigenden Oberfläche 33 des Werkzeugs 32 über eine sonstige Eingabeschnittstelle.

Entsprechend wird die Positionierung des Düsenträgers so gesteuert, dass die Borsten 23 für den Reinigungsvorgang auf die zu reinigende Oberfläche 33 des Werkzeuges 32 so weit aufgedrückt werden, dass diese gekrümmt auf der Oberfläche 33 aufliegen. Die Halterung der Vorrichtung 1 über die Trageeinrichtung 26 und die berührungslose Steuerung über die Steuereinheit ermöglichen des Weiteren das ausschließlich die Borsten 23 der Abdichtung 20, 21 der Vorrichtung 1 beim Reinigungsvorgang die zu reinigende Oberfläche 33 des Werkzeuges 32 berühren, so dass eine Verschmutzung oder Beschädigung der Oberfläche 33 des Werkzeuges 32 durch Fahrgestänge oder dergleichen vermieden und eine optimale, dichte Anpassung der Reinigungsvorrichtung 1 an die dreidimensionale Oberfläche 33 gewährleistet wird.

### Bezugszeichenliste

- 1: Vorrichtung
- 2: Zentrallager
- 3: Düsenträger
- 4: Gehäuse
- 5: Arm
- 6: Arm
- 7: Strahldüse
- 8: Antrieb
- 9: Anschluss Reinigungsflüssigkeit
- 10: Antrieb
- 11: Zahnrad
- 12: Zahnkranz
- 13: Sperrluftanschluss
- 14: Druckventil
- 15: Bohrung
- 16: Vakuumanschluss
- 17: Zwischenkammer
- 18: Außenwand
- 19: Innenwand
- 20: Abdichtung
- 21: Abdichtung
- 22: Befestigungskragen
- 23: Borste
- 24: Innenraum
- 25: Öffnung
- 26: Trageeinrichtung
- 27: Linearachse
- 28: Gelenk
- 29: Linearachse
- 30: Linearachse
- 31: Halter
- 32: Körper
- 33: Oberfläche

- ω_{D}: Drehzahl Düsenträger
- ω₁: Drehzahl Antrieb
- ω₂: Drehzahl Abdichtung
- v_{x,y}: Vorschubgeschwindigkeit
- eₓ: Verschieberichtung
- e_{y}: Verschieberichtung
- e_{z}: Verschieberichtung
- ϕₓ: Schwenkrichtung
- ϕ_{y}: Schwenkrichtung
- n: Normale
- h: Erstreckung der Borsten in z-Richtung
- l₀: Absolutlänge der Borsten
- α: Biegewinkel
- β: Anstellwinkel
- D_{z}: Drehachse Zentrallager

## Patentansprüche

1. Vorrichtung zum Reinigen der Oberfläche (33) eines Werkzeuges (32) für die Formgebung der Oberfläche eines großflächigen Faserverbundwerkstoffkörpers mit einer unter Hochdruck stehenden Reinigungsflüssigkeit, aufweisend
- einen an einem Zentrallager (2) drehbar gehaltenen Düsenträger (3),
- wenigstens eine in einem Arm (5, 6) des Düsenträgers (3) gehaltene Strahldüse (7), aus der in Funktion die unter Hochdruck stehende Reinigungsflüssigkeit austritt,
- eine Steuereinheit zur Steuerung des zu beaufschlagenden Druckes der Reinigungsflüssigkeit,
- wobei der Düsenträger (3) von einem Gehäuse (4) umgeben ist, das zur zu reinigenden Oberfläche (33) des Werkzeuges (32) hin mit einer Öffnung (25) versehen ist,
- wobei das Gehäuse (4) an eine Absaugeinrichtung angeschlossen ist, mit der ein Innenraum (24) des Gehäuses (4), in dem der Düsenträger (3) angeordnet ist, absaugbar ist,
- wobei der Innenraum (24) des Gehäuses (4) über ein Druckventil (14) mit einer Außenumgebung verbunden ist,
- wobei an einem die Öffnung (25) bildenden Ende des Gehäuses (4) eine formflexible flüssigkeitsdichte Abdichtung (20, 21) angeordnet ist, mit der der Raum zwischen dem Düsenträger (3) und der zu reinigenden Oberfläche (33) des Körpers (32) zur Außenumgebung abdichtbar ist
- wobei das Gehäuse (4) eine doppelwandige Mantelfläche aufweist, mit einer zwischen einer Außenwand (18) und einer Innenwand (19) gebildeten Zwischenkammer (17), wobei jeweils eine formflexible Abdichtung (20, 21) an der Außenwand (18) und der Innenwand (19) angeordnet ist,
**dadurch gekennzeichnet, dass**
- dass die Steuereinheit wenigstens zwei Druckbereichseinstellungen aufweist, wobei in einer ersten Druckbereichseinstellung der Druck der aus der wenigstens einen Strahldüse (7) austretenden Reinigungsflüssigkeit so eingestellt ist, dass Faserverbundwerkstoffreste von einer mit einem Trennmittel beschichteten Oberfläche (33) des Werkzeuges (32) entfernbar sind, ohne die Trennmittelschicht zu beschädigen und in einer zweiten Druckbereichseinstellung der Druck der aus der wenigstens einen Strahldüse (7) austretenden Reinigungsflüssigkeit so eingestellt ist, dass mit der wenigstens einen Strahldüse (7) das Trennmittel von der Oberfläche (33) des Werkzeuges (32) entfernbar ist,
- wobei die Außenwand (18) und/oder die Innenwand (19) um eine Rotationsachse (D_{z}) des Düsenträgers (3) rotierbar ausgebildet ist.

2. Vorrichtung nach Anspruch 1, **dadurch gekennzeichnet, dass** die Zwischenkammer (17) mit einer Sperrlufteinheit in Wirkverbindung steht.

3. Vorrichtung nach einem der vorstehenden Ansprüche, **dadurch gekennzeichnet, dass** der Düsenträger (3) entlang seiner Rotationsachse (D_{z}) höhenverstellbar ausgebildet ist.

4. Vorrichtung nach einem der vorstehenden Ansprüche, **dadurch gekennzeichnet, dass** das Zentrallager (2) an einer Trageeinrichtung (29) mit wenigstens drei Linearachsen (27, 29, 30) und zwei Schwenkachsen festgelegt ist.

5. Vorrichtung nach einem der vorstehenden Ansprüche, **dadurch gekennzeichnet, dass** eine Drehzahl (ω_{D}) des wenigstens einen Düsenträgers (3) in Abhängigkeit von seiner Vorschubgeschwindigkeit (v_{x,y}) ansteuerbar ist.

6. Vorrichtung nach einem der vorstehenden Ansprüche, **dadurch gekennzeichnet, dass** die Abdichtung (20, 21) als Vielzahl nebeneinander angeordneter flexibler Borsten (23), insbesondere Metall- oder Kunststoffborsten, ausgebildet ist.

7. Vorrichtung nach Anspruch 6, **dadurch gekennzeichnet, dass** die Borsten (23) zur Außenumgebung hin gekrümmt ausgerichtet sind.

8. Vorrichtung nach Anspruch 6 oder 7, **dadurch gekennzeichnet, dass** die Borsten (23) derart gekrümmt ausgerichtet sind, dass die freien Enden der Borsten (23) in eine Richtung seitlich versetzt zur Vorschubrichtung der Gehäusewand (18, 19), an der die Borsten (23) befestigt sind, zeigen.

9. Vorrichtung nach einem der Ansprüche 6 bis 8, **dadurch gekennzeichnet, dass** die Borsten (23) derart gekrümmt ausgerichtet sind, dass die freien Enden der Borsten (23) in eine Richtung entgegen einer Rotationsrichtung der Gehäusewand (18, 19), an der die Borsten (23) befestigt sind, zeigen.

10. Vorrichtung nach Anspruch 7, **dadurch gekennzeichnet, dass** ein Anstellwinkel (β) der Borsten (23) relativ zur Drehachse der Gehäusewand (18, 19) zwischen 5° und 45° beträgt.

11. Vorrichtung nach einem der vorstehenden Ansprüche, **dadurch gekennzeichnet, dass** in der ersten Druckbereichseinstellung der bei der Reinigung zu beaufschlagende Druck der Reinigungsflüssigkeit zwischen 40 MPa und 120 MPa, insbesondere zwischen 70 MPa und 90 MPa beträgt.

12. Vorrichtung nach einem der vorstehenden Ansprüche, **dadurch gekennzeichnet, dass** in der zweiten Druckbereichseinstellung der bei der Reinigung zu beaufschlagende Druck der Reinigungsflüssigkeit zwischen 200 MPa und 320 MPa, insbesondere zwischen 230 MPa und 270 MPa beträgt.

13. Verfahren zum Reinigen der Oberfläche (33) eines Werkzeuges (32) für die Formgebung der Oberfläche eines großflächigen Faserverbundstoffkörpers mit einer Vorrichtung (1) gemäß einem der vorstehenden Ansprüche, wobei zumindest eine Position und Vorschubgeschwindigkeit (v_{x,y}) des Düsenträgers (3) relativ zur zu reinigenden Oberfläche (33) des Körpers (32) sowie ein zu beaufschlagender Druck der aus der wenigstens einen Strahldüse (7) austretenden Reinigungsflüssigkeit durch eine Steuereinheit gesteuert wird, wobei die Steuereinheit wenigstens zwei Druckbereichseinstellungen aufweist, wobei in einer ersten Druckbereichseinstellung der Druck der aus der wenigstens einen Strahldüse (7) austretenden Reinigungsflüssigkeit so eingestellt ist, dass Faserverbundwerkstoffreste von einer mit einem Trennmittel beschichteten Oberfläche (33) des Werkzeuges (32) entfernt werden, ohne die Trennmittelschicht zu beschädigen und in einer zweiten Druckbereichseinstellung der Druck der aus der wenigstens einen Strahldüse (7) austretenden Reinigungsflüssigkeit so eingestellt ist, dass mit der wenigstens einen Strahldüse (7) das Trennmittel von der Oberfläche (33) des Werkzeuges (32) entfernt wird.

14. Verfahren nach Anspruch 13, **dadurch gekennzeichnet, dass** der bei der Reinigung zu beaufschlagende Druck der Reinigungsflüssigkeit positionsabhängig gesteuert wird.

15. Verfahren nach einem der Ansprüche 13 oder 14, **dadurch gekennzeichnet, dass** der bei der Abtragung von Faserverbundwerkstoffresten zu beaufschlagende Druck der Reinigungsflüssigkeit in der ersten Druckbereichseinstellung zwischen 40 MPa und 120 MPa, insbesondere zwischen 70 MPa und 90 MPa beträgt.

16. Verfahren nach einem der Ansprüche 13 bis 15, **dadurch gekennzeichnet, dass** der bei der Abtragung des Trennmittels zu beaufschlagende Druck der Reinigungsflüssigkeit in der zweiten Druckbereichseinstellung zwischen 200 MPa und 320 MPa, insbesondere zwischen 230 MPa und 270 MPa beträgt.

17. Verfahren nach einem der Ansprüche 13 bis 16, **dadurch gekennzeichnet, dass** eine durch Beaufschlagung der Reinigungsflüssigkeit auf die zu reinigende Oberfläche (33) des Werkzeuges (32) ausgeübte Energieverteilung zwischen 10 MJ/m² und 25 MJ/m² beträgt.

18. Verfahren nach einem der Ansprüche 13 bis 17, **dadurch gekennzeichnet, dass** die Reinigungsflüssigkeit vor deren Beaufschlagung auf die zu reinigende Oberfläche (33) des Werkzeuges (32) auf eine Temperatur nahe der Verdampfungstemperatur der Reinigungsflüssigkeit gebracht wird.

19. Verfahren nach einem der Ansprüche 13 bis 18, **dadurch gekennzeichnet, dass** die zu reinigende Oberfläche (33) des Werkzeuges (32) berührungslos von der Steuereinheit erkannt wird und entsprechend die Positionierung des wenigstens einen Düsenträgers (3) derart gesteuert wird, dass die Borsten (23) auf die zu reinigende Oberfläche (33) des Werkzeuges (32) unter Krümmung der Borsten aufgedrückt werden.

20. Verfahren nach einem der Ansprüche 13 bis 19, **dadurch gekennzeichnet, dass** nur die Borsten (23) der Abdichtung (20, 21) der Vorrichtung (1) beim Reinigungsvorgang die zu reinigende Oberfläche (33) des Werkzeuges (32) berühren.

## Claims

1. A device for cleaning the surface (33) of a tool (32) for the forming of the surface of a large-area fiber composite material body using a highly-pressurized cleaning liquid, comprising
- a nozzle support (3) rotatably mounted on a central bearing (2),
- at least one jet nozzle (7) held in an arm (5, 6) of the nozzle support (3), from which the highly-pressurized cleaning liquid exits during operation,
- a control unit for controlling the pressure of the cleaning liquid to be applied,
- wherein the nozzle support (3) is enclosed by a housing (4), which is provided with an opening (25) toward the surface (33) to be cleaned of the tool (32),
- wherein the housing (4) is attached to a suction unit, using which an interior (24) of the housing (4), in which the nozzle support (3) is arranged, can be suctioned off,
- wherein the interior (24) of the housing (4) is connected via a pressure valve (14) to an external environment,
- wherein a shape-flexible liquid-tight seal (20, 21) is arranged at the end of the housing (4) forming the opening (25), using which seal the space between the nozzle support (3) and the surface (33) to be cleaned of the body (32) can be sealed off from the external environment,
- wherein the housing (4) has a double-walled lateral surface, having an intermediate chamber (17) formed between an outer wall (18) and an inner wall (19), wherein a shape-flexible seal (20, 21) is arranged in each case on the outer wall (18) and the inner wall (19),
**characterized in that**
- the control unit has at least two pressure range settings, wherein in a first pressure range setting, the pressure of the cleaning liquid exiting from the at least one jet nozzle (7) is set in such a way that fiber composite material residues are removable from a surface (33) of the tool (32) coated using a release agent without damaging the release agent and, in a second pressure range setting, the pressure of the cleaning liquid exiting from the at least one jet nozzle (7) is set in such a way that the release agent is removable from the surface (33) of the tool (32) using the at least one jet nozzle (7)
- wherein the outer wall (18) and/or the inner wall (19) is designed as rotatable about an axis of rotation (Dz) of the nozzle support (3).

2. The device according to Claim 1, **characterized in that** the intermediate chamber (17) is operationally connected to an air purge unit.

3. The device according to any one of the preceding claims, **characterized in that** the nozzle support (3) is designed as vertically-adjustable along its axis of rotation (Dz).

4. The device according to any one of the preceding claims, **characterized in that** the central support (2) is fixed on a support unit (29) having at least three linear axes (27, 29, 30) and two pivot axes.

5. The device according to any one of the preceding claims, **characterized in that** a speed (ω_{D}) of the at least one nozzle support (3) can be modulated in dependence on its advance velocity (v_{x,y}).

6. The device according to any one of the preceding claims, **characterized in that** the seal (20, 21) is formed as a plurality of flexible bristles (23) arranged adjacent to one another, in particular metal or plastic bristles.

7. The device according to Claim 6, **characterized in that** the bristles (23) are oriented curved toward the external environment.

8. The device according to Claim 6 or 7, **characterized in that** the bristles (23) are oriented curved in such a way that the free ends of the bristles (23) point in a direction laterally offset in relation to the advance direction of the housing wall (18, 19), on which the bristles (23) are fastened.

9. The device according to any one of Claims 6 to 8, **characterized in that** the bristles (23) are oriented curved in such a way that the free ends of the bristles (23) point in a direction opposite to a rotational direction of the housing (18, 19) on which the bristles (23) are fastened.

10. The device according to Claim 7, **characterized in that** an angle of attack (β) of the bristles (23) in relation to the axis of rotation of the housing wall (18, 19) is between 5° and 45°.

11. The device according to any one of the preceding claims, **characterized in that,** in the first pressure range setting, the pressure of the cleaning liquid to be applied during the cleaning is between 40 MPa and 120 MPa, in particular between 70 MPa and 90 MPa.

12. The device according to any one of the preceding claims, **characterized in that,** in the second pressure range setting, the pressure of the cleaning liquid to be applied during the cleaning is between 200 MPa and 320 MPa, in particular between 230 MPa and 270 MPa.

13. A method for cleaning the surface (33) of a tool (32) for shaping the surface of a large-area fiber composite material body using a device (1) according to any one of the preceding claims, wherein at least a position and advance velocity (v_{x,y}) of the nozzle support (3) in relation to the surface (33) to be cleaned of the body (32) and a pressure to be applied of the cleaning liquid exiting from the at least one jet nozzle (7) is controlled by a control unit, wherein the control unit has at least two pressure range settings, wherein in a first pressure range setting, the pressure of the cleaning liquid exiting from the at least one jet nozzle (7) is set in such a way that fiber composite material residues are removed from a surface (33) of the tool (32) coated using a release agent, without damaging the release agent layer, and, in a second pressure range setting, the pressure of the cleaning liquid exiting from the at least one jet nozzle (7) is set in such a way that the release agent is removed from the surface (33) of the tool (32) using the at least one jet nozzle (7).

14. The method according to Claim 13, **characterized in that** the pressure of the cleaning liquid to be applied is controlled in a position-dependent manner during the cleaning.

15. The method according to any one of Claims 13 or 14, **characterized in that** the pressure of the cleaning liquid to be applied during the removal of fiber composite material residues in the first pressure range setting is between 40 MPa and 120 MPa, in particular between 70 MPa and 90 MPa.

16. The method according to any one of Claims 13 to 15, **characterized in that** the pressure of the cleaning liquid to be applied during the removal of the release agent in the second pressure range setting is between 200 MPa and 320 MPa, in particular between 230 MPa and 270 MPa.

17. The method according to any one of Claims 13 to 16, **characterized in that** an energy distribution exerted on the surface (33) to be cleaned of the tool (32) by application of the cleaning liquid is between 10 MJ/m² and 25 MJ/m².

18. The method according to any one of Claims 13 to 17, **characterized in that** the cleaning liquid is brought to a temperature close to the vaporization temperature of the cleaning liquid before its application to the surface (33) to be cleaned of the tool (32).

19. The method according to any one of Claims 13 to 18, **characterized in that** the surface (33) to be cleaned of the tool (32) is contactlessly detected by the control unit and the positioning of the at least one nozzle support (3) is accordingly controlled in such a way that the bristles (23) are pressed onto the surface (33) to be cleaned of the tool (32) with curvature of the bristles.

20. The method according to any one of Claims 13 to 19, **characterized in that** only the bristles (23) of the seal (20, 21) of the device (1) touch the surface (33) to be cleaned of the tool (32) during the cleaning procedure.

## Revendications

1. Dispositif de nettoyage de la surface (33) d'un outil (32) pour la mise en forme de la surface d'un corps en matériau composite renforcé de fibres de grande surface avec un liquide de nettoyage sous haute pression, présentant :
- un porte-buses (3) maintenu de manière rotative sur un palier central (2),
- au moins une buse de projection (7) maintenue dans un bras (5, 6) du porte-buses (3), de laquelle sort, en fonctionnement, le liquide de nettoyage sous haute pression,
- une unité de commande pour commander la pression du liquide de nettoyage à appliquer,
- dans lequel le porte-buses (3) est entouré d'un boîtier (4) qui est pourvu d'une ouverture (25) vers la surface à nettoyer (33) de l'outil (32),
- dans lequel le boîtier (4) est raccordé à un moyen d'aspiration avec lequel un espace intérieur (24) du boîtier (4), dans lequel le porte-buses (3) est disposé, peut être aspiré,
- dans lequel l'espace intérieur (24) du boîtier (4) est relié à un environnement extérieur par une soupape de pression (14),
- dans lequel, à une extrémité du boîtier (4) formant l'ouverture (25), est disposé un joint d'étanchéité (20, 21) de forme flexible et étanche aux liquides, avec lequel l'espace entre le porte-buses (3) et la surface à nettoyer (33) du corps (32) peut être rendu étanche par rapport à l'environnement extérieur,
- dans lequel le boîtier (4) présente une surface extérieure à double paroi, avec une chambre intermédiaire (17) formée entre une paroi extérieure (18) et une paroi intérieure (19), un joint d'étanchéité (20, 21) de forme flexible étant disposé respectivement sur la paroi extérieure (18) et la paroi intérieure (19),
**caractérisé en ce que**
- l'unité de commande présente au moins deux réglages de plage de pression, dans lequel, dans un premier réglage de plage de pression, la pression du liquide de nettoyage sortant de ladite au moins une buse de projection (7) est réglée de telle sorte que des restes de matériau composite renforcé de fibres puissent être éliminés d'une surface (33) de l'outil (32) revêtue d'un agent de démoulage sans endommager la couche d'agent de démoulage et, dans un deuxième réglage de plage de pression, la pression du liquide de nettoyage sortant de ladite au moins une buse de projection (7) est réglée de telle sorte que l'agent de démoulage puisse être éliminé de la surface (33) de l'outil (32) avec ladite au moins une buse de projection (7),
- dans lequel la paroi extérieure (18) et/ou la paroi intérieure (19) sont réalisées de manière à pouvoir tourner autour d'un axe de rotation (D_{z}) du porte-buses (3) .

2. Dispositif selon la revendication 1, **caractérisé en ce que** la chambre intermédiaire (17) est en liaison fonctionnelle avec une unité d'air de barrage.

3. Dispositif selon l'une des revendications précédentes, **caractérisé en ce que** le porte-buses (3) est réalisé de manière réglable en hauteur le long de son axe de rotation (D_{z}).

4. Dispositif selon l'une des revendications précédentes, **caractérisé en ce que** le palier central (2) est fixé à un moyen de support (29) comportant au moins trois axes linéaires (27, 29, 30) et deux axes de pivotement.

5. Dispositif selon l'une des revendications précédentes, **caractérisé en ce qu'**une vitesse de rotation (ω_{D}) dudit au moins un porte-buses (3) peut être commandée en fonction de sa vitesse d'avance (v_{x,y}).

6. Dispositif selon l'une des revendications précédentes, **caractérisé en ce que** le joint d'étanchéité (20, 21) est réalisé sous la forme d'une pluralité de poils flexibles (23), en particulier de poils métalliques ou plastiques, disposés côte à côte.

7. Dispositif selon la revendication 6, **caractérisé en ce que** les poils (23) sont orientés de manière incurvée vers l'environnement extérieur.

8. Dispositif selon la revendication 6 ou 7, **caractérisé en ce que** les poils (23) sont orientés de manière incurvée de telle sorte que les extrémités libres des poils (23) soient orientées dans une direction décalée latéralement par rapport à la direction d'avance de la paroi de boîtier (18, 19) sur laquelle les poils (23) sont fixés.

9. Dispositif selon l'une des revendications 6 à 8, **caractérisé en ce que** les poils (23) sont orientés de manière incurvée de telle sorte que les extrémités libres des poils (23) soient orientées dans une direction opposée à une direction de rotation de la paroi de boîtier (18, 19) sur laquelle les poils (23) sont fixés.

10. Dispositif selon la revendication 7, **caractérisé en ce qu'**un angle d'inclinaison (β) des poils (23) par rapport à l'axe de rotation de la paroi de boîtier (18, 19) est compris entre 5° et 45°.

11. Dispositif selon l'une des revendications précédentes, **caractérisé en ce que**, dans le premier réglage de plage de pression, la pression du liquide de nettoyage à appliquer lors du nettoyage est comprise entre 40 MPa et 120 MPa, en particulier entre 70 MPa et 90 MPa.

12. Dispositif selon l'une des revendications précédentes, **caractérisé en ce que**, dans le deuxième réglage de plage de pression, la pression du liquide de nettoyage à appliquer lors du nettoyage est comprise entre 200 MPa et 320 MPa, en particulier entre 230 MPa et 270 MPa.

13. Procédé de nettoyage de la surface (33) d'un outil (32) pour la mise en forme de la surface d'un corps en matériau composite renforcé de fibres de grande surface avec un dispositif (1) selon l'une des revendications précédentes, dans lequel au moins une position et une vitesse d'avance (v_{x,y}) du porte-buses (3) par rapport à la surface à nettoyer (33) du corps (32) ainsi qu'une pression à appliquer du liquide de nettoyage sortant de ladite au moins une buse de projection (7) sont commandées par une unité de commande, dans lequel l'unité de commande présente au moins deux réglages de plage de pression, dans lequel, dans un premier réglage de plage de pression, la pression du liquide de nettoyage sortant de ladite au moins une buse de projection (7) est réglée de telle sorte que des restes de matériau composite renforcé de fibres soient éliminés d'une surface (33) de l'outil (32) revêtue d'un agent de démoulage sans endommager la couche d'agent de démoulage et, dans un deuxième réglage de plage de pression, la pression du liquide de nettoyage sortant de ladite au moins une buse de projection (7) est réglée de telle sorte que l'agent de démoulage soit éliminé de la surface (33) de l'outil (32) avec ladite au moins une buse de projection (7).

14. Procédé selon la revendication 13, **caractérisé en ce que** la pression du liquide de nettoyage à appliquer lors du nettoyage est commandée en fonction de la position.

15. Procédé selon l'une des revendications 13 ou 14, **caractérisé en ce que** la pression du liquide de nettoyage à appliquer lors de l'enlèvement des restes de matériaux composites renforcé de fibres dans le premier réglage de plage de pression est comprise entre 40 MPa et 120 MPa, en particulier entre 70 MPa et 90 MPa.

16. Procédé selon l'une des revendications 13 à 15, **caractérisé en ce que** la pression du liquide de nettoyage à appliquer lors de l'enlèvement de l'agent de démoulage dans le deuxième réglage de plage de pression est comprise entre 200 MPa et 320 MPa, en particulier entre 230 MPa et 270 MPa.

17. Procédé selon l'une des revendications 13 à 16, **caractérisé en ce qu'**une répartition d'énergie exercée par l'application du liquide de nettoyage sur la surface à nettoyer (33) de l'outil (32) est comprise entre 10 MJ/m² et 25 MJ/m².

18. Procédé selon l'une des revendications 13 à 17, **caractérisé en ce que** le liquide de nettoyage est porté à une température proche de la température de vaporisation du liquide de nettoyage avant son application sur la surface à nettoyer (33) de l'outil (32).

19. Procédé selon l'une des revendications 13 à 18, **caractérisé en ce que** la surface à nettoyer (33) de l'outil (32) est détectée sans contact par l'unité de commande et, en conséquence, le positionnement dudit au moins un porte-buses (3) est commandé de telle sorte que les poils (23) soient appliqués sur la surface à nettoyer (33) de l'outil (32) avec une incurvation des poils.

20. Procédé selon l'une des revendications 13 à 19, **caractérisé en ce que** seuls les poils (23) du joint d'étanchéité (20, 21) du dispositif (1) sont en contact avec la surface à nettoyer (33) de l'outil (32) lors de l'opération de nettoyage.
